# EUROPEAN PATENT APPLICATION

(11) **EP 4 685 082 A1**
(43) Date of publication of application: **28.01.2026**
(21) Application number: 24190391.3
(22) Date of filing: 23.07.2024
(51) Int. Cl.: B65G 1/04, G05D 1/00

(54) **AN AUTOMATED STORAGE SYSTEM AND A METHOD FOR OPERATING AN AUTOMATED STORAGE SYSTEM**

(71) Applicant: MOVU Deutschland GmbH, 65205 Wiesbaden (DE)
(72) Inventor: Heddinga, Matthias, 23628 Krummesse (DE)
(74) Representative: Patentanwälte Hemmer Lindfeld Frese Partnerschaft mbB

(57) **Abstract**

Disclosed and claimed is an automated storage system (1) comprising a storage rack (3) with a plurality of storage positions (7) for storage units (9) on multiple rack levels (5) and one or more automated shuttles (13) for transporting storage units on shuttle tracks (11). Each automated shuttle comprises at least one drive unit driving one or more sets of wheels for moving on the shuttle tracks. Each automated shuttle of the one or more automated shuttles is configured so that during operation of the shuttle an acceleration of the automated shuttle does not exceed an admissible acceleration and/or an admissible deceleration which is less than a maximum possible acceleration or deceleration of the shuttle. The automated storage system is configured so that the admissible acceleration and the admissible deceleration of each automated shuttle can be modified. Further, a method for operating an automated storage system 1 is described and claimed.

## Description

The present invention is directed to an automated storage system comprising a storage rack with a plurality of storage positions for storage units on multiple rack levels and one or more automated shuttles for transporting storage units to and from each of the plurality of storage positions on shuttle tracks. The shuttle tracks extend either parallel to a first axis or parallel to a second axis. The first axis is perpendicular to the second axis. Further, the invention is directed to a method for operating an automated storage system.

WO 2021 /059007 A1 discloses an automated storage system with storage racks having storage position for storage units on a plurality of rack levels. Within each rack level, the storage positions are interconnected with generally horizontally extending shuttle tracks for automated or self-driving shuttles. The automated shuttles transport storage units between the storage position by driving on the tracks. Inclined ramps interconnect the shuttle tracks on different rack levels so that a shuttle may not only drive between storage position on one rack level but also move between shuttle position on different rack levels.

One of the capacity-limiting factors of automated storage systems is the time it takes for the automated shuttles to deliver storage units from one location to another. Thus, for increasing the capacity of the automated storage system, the shuttles drive as fast as technically possible without risking a shuttle falling off the tracks or the goods in the transported storage units being damaged. Protecting the goods in the storage units from damage is one of the most limiting factors as it is essentially limits the speed at which the shuttles can drive along the shuttle tracks or limits the types of goods that can be transported.

It is an object of the present invention to provide a further improved automated storage system as well as a method for operating such a storage system.

This object is solved by an automated storage system according to claim 1 and a method for operating an automated storage system according to claim 8. Preferred embodiments of the automated storage system and the method for operating an automated storage system are the subject of the dependent claims.

In a first aspect the present invention is directed to an automated storage system comprising a storage rack with a plurality of storage positions for storage units on multiple rack levels and one or more automated shuttles for transporting storage units to and from each of the plurality of storage positions on shuttle tracks. The shuttle tracks only extend parallel to a first axis and parallel to a second axis. The first axis is perpendicular to the second axis. Each automated shuttle of the one or more automated shuttles comprises at least one drive unit. The at least one drive unit drives one or more sets of wheels for moving on the shuttle tracks. Each automated shuttle of the one or more automated shuttles is configured so that during operation of the shuttle an acceleration of the automated shuttle does not exceed an admissible acceleration. The admissible acceleration is less than a maximum possible acceleration of the shuttle. Alternatively or additionally, each automated shuttle of the one or more automated shuttles is configured so that during operation of the shuttle a deceleration of the automated shuttle does not exceed an admissible deceleration. The admissible deceleration is less than a maximum possible deceleration of the shuttle. The automated storage system is configured so that the admissible acceleration and/or deceleration of each automated shuttle of the one or more automated shuttles can be modified.

In other words, the automated shuttle system comprises a plurality of rack levels which provide storage positions for storage units. Storage units may, for example, be storage bins, totes, or other kinds of containers in which goods to be stored are located. The storage units preferably have an identical footprint, i.e., they take up the same space in a horizontal plane so that all storage positions and all shuttles may be of identical size. The height of the storage units may differ so that in some embodiments multiple stacked storage units may be placed in a single storage position. Since each rack level extends generally horizontally, the rack levels essentially from a vertically extending stack.

The storage positions are interconnected by storage tracks for self-driving shuttles or carriages. The shuttles drive on their wheels along the shuttle tracks, picking up storage units in one location and dropping them off at another location. The locations where storage units are collected or dropped off may include storage positions, processing sites for handling goods located in the storage units, flipper sites where the order to storage units in a stack of storage units can be changed, a dispenser unit where goods located in one or more storage units are combined for a shipment, and others. Each of these locations or positions is accessible by the one or more automated shuttles.

The shuttles move between the positions on straight shuttle tracks which may also be simply referred to as tracks. The tracks extend primarily horizontally and only parallel to a first axis and a second axis. The first axis and the second axis are generally perpendicular to each other and extend parallel to the horizontal plane. Within each rack level, a shuttle can, therefore, only drive in four different directions, i.e., backwards and forwards parallel to the first axis or backwards and forwards parallel to the second axis. At intersections between a first track extending parallel to the first axis and a second tracks extending parallel to the second axis, a shuttle may change its direction by ±90°.

For example, the storage rack arrangement may comprise storage channels with a plurality of storage positions extending parallel to the first axis. The storage channels are accessible for the shuttles by means of shuttle tracks extending along the storage channels, i.e., also parallel to the first axis. The storage channels may branch off a main aisle which is formed by a shuttle track extending parallel to the second axis. A rack level may comprise multiple main aisles, and also tracks running parallel to the first axis which are not storage channels.

The shuttle tracks of the different rack levels are interconnected by inclined ramps, i.e., tracks that do not run parallel to the horizontal plane. The ramps extend generally in the direction of either the first axis or the second axis but are inclined thereto. They allow the shuttles to move vertically from one rack level to another by driving up and down the ramps on their own wheels. No elevator or other kind of lifting device is required for moving storage units or automated shuttles in the vertical direction.

For moving along the shuttle tracks, the shuttles comprise one or more sets of wheels. The shuttles move on the wheels along the tracks and, also up and down the ramps for changing rack levels. The wheels are driven by at least one drive unit which may, for example, be an electric motor. The speed and the acceleration of the shuttles can be adjusted. For example, each shuttle may comprise one or more control modules that control the direction and speed at which the shuttles travel along the shuttle tracks.

According to the present invention, not only the speed and direction of the shuttles may be controlled. Additionally, it is also possible to control and, in particular, limit at least one of the acceleration and the deceleration of the shuttles. Thus, the automated storage system allows to set an admissible acceleration and/or an admissible deceleration for the one or more shuttles that limits the rate at which a shuttle may change its velocity. The term acceleration as understood herein refers to positive acceleration, whereas the term deceleration refers to negative acceleration. Thus, an accelerating shuttle increases its speed, while a shuttle that decelerates decreases or reduces its speed, i.e., the shuttle brakes.

The admissible acceleration is less than the maximum acceleration of the shuttle that would be technically feasible without any further limitation and without any consideration of the goods transported in the storage units. Likewise, the admissible deceleration is less than the maximum deceleration of the shuttle that would be technically feasible without any further limitation and without any consideration of the goods transported in the storage units.

The admissible acceleration and the admissible deceleration may be the same value. However, it is also possible to have different admissible accelerations and decelerations. Also, the admissible acceleration may differ from the admissible deceleration and only one of an admissible acceleration and an admissible deceleration may be set. For example, the admissible acceleration may be close to the maximum permissible acceleration, whereas the admissible deceleration may be restricted considerably compared to the maximum possible deceleration.

In some embodiments, the maximum acceleration of the shuttle may be the same as the maximum deceleration. However, in many embodiments the maximum deceleration may be considerably greater than the maximum acceleration. The positive acceleration is commonly limited by the power available at the at least one drive unit, whereas the maximum deceleration will oftentimes depend on the power of the brakes of the shuttle.

Rapid acceleration and deceleration may generally have an adverse effect on the articles or goods in the storage units transported on the shuttles. Depending on the type of article being transported, high acceleration can lead to damage to the article that has an impact on the value of the article from the consumer's point of view. Examples of damages are pressure marks on foodstuffs, pressure marks or dents on packaging, scratches on glossy packaging, or even malfunctions of the article due to breaks or cracks. Also, if a shuttle brakes, i.e., decelerates, too hard, articles or goods may topple out of the storage boxes. By modifying the allowable acceleration and the allowable deceleration of the shuttles, the acceleration and deceleration can be limited to values that do not damage the goods transported. In particular, for more fragile goods, the admissible acceleration and deceleration can be set at a lower value. If goods are transported that are less susceptible to acceleration-related damages, the automated shuttles can accelerate and decelerate faster, i.e., brake harder or speed-up faster. Thus, the admissible shuttle acceleration and deceleration allows for a trade-off between high speeds and high-speed changes of shuttles in the automated storage system on the one hand and the transport of fragile goods on the other hand. Shuttles with higher admissible accelerations may reach higher speeds sooner. Shuttles with higher admissible decelerations may sustain higher speeds for longer periods as they can brake harder. Shuttles with lower admissible acceleration may not reach the same top speeds. Likewise, shuttles with lower admissible decelerations also may have to brake earlier as they cannot slow down as quickly.

In a preferred embodiment, the automated storage system comprises a central control unit configured for communicating with each of the automated shuttles. The control unit is further configured for remotely modifying the admissible acceleration and/or the admissible deceleration of each automated shuttle of the one or more automated shuttles.

Hence, in the preferred embodiment the automated storage system comprises a central control unit. The term central control unit does not imply that there is a single unit controlling the entire automated storage system. The control unit could be made up, for example, from a plurality of distributed processing units or just a single system controlling the shuttles. According to the preferred embodiment, the central control unit is adapted to communicate with the automated shuttles. The communication may, for example, occur via a wireless or a wired connection. The control unit is adapted to change the admissible acceleration and/or the admissible deceleration of the automated shuttles from a distance. For example, the control unit may send a shuttle a direct instruction to limit the admissible acceleration or the admissible deceleration. This advantageously allows to adapt the acceleration and deceleration of the shuttles depending on the transported cargo and without having to locally modify each of the shuttles.

It is noted that the same control unit may also be used to send the automated shuttles instructions where the shuttle is pick-up or drop-off storage units, provide directions to the shuttles and perform other task of the automated storage system.

Preferably, the central control unit is configured for setting the same admissible acceleration and/or the same admissible deceleration for all automated shuttles of the one or more automated shuttles. Thus, in the preferred embodiment all of the one or more automated shuttles would be restricted to the same allowable acceleration and/or the same deceleration. Thereby, it can be assured that all automated shuttles are bound to the same acceleration and/or deceleration limit. All of the shuttles and all goods transported in the automated storage system are thus subject to the same maximum acceleration or deceleration.

Alternatively or additionally, the central control unit is configured for setting an individual admissible acceleration and/or an individual admissible deceleration for least one automated shuttle of the one or more automated shuttles. Hence, in the preferred embodiment the central control unit may assign a limit on the acceleration to a specific automated shuttle. Alternatively or additionally, the central control unit may assign a limit on the deceleration to a specific automated shuttle.

For example, the central control unit may modify the admissible acceleration and the admissible deceleration of a shuttle as long as a storage unit with a particularly delicate good is transported. When the same shuttle or another shuttle transports a storage unit carrying less fragile goods, the admissible acceleration and the admissible deceleration of the shuttle may be higher. Assigning the admissible acceleration and deceleration on a per-shuttle basis advantageously allows for generally higher accelerations and/or decelerations as the acceleration and/or deceleration only need to be restricted for shuttles carrying storage units with goods that are prone to be damaged by high accelerations or decelerations. For example, when assigning an automated shuttle to transport a specific storage unit, the central control unit may at the same time set an admissible negative and/or positive acceleration that applies while the storage unit is carried by the automated shuttle. When shuttle travels without a storage unit or with a with a storage unit carrying less delicate goods, other admissible accelerations and/or decelerations may be assigned to the shuttle.

In a preferred embodiment, at least one automated shuttle of the one or more automated shuttles comprises a means for determining an acceleration limit associated with a storage unit transported by the respective automated shuttle. The at least one automated shuttle is further configured for modifying the admissible acceleration of the automated shuttle based on the determined acceleration limit associated with the storage unit transported by the automated shuttle. Alternatively or additionally, the at least one automated shuttle comprises a means for determining a deceleration limit associated with a storage unit transported by the respective automated shuttle. The at least one automated shuttle is further configured for modifying the admissible deceleration of the automated shuttle based on the determined deceleration limit associated with the storage unit transported by the automated shuttle. The same means may preferably be used for determining an acceleration limit and a deceleration limit.

For example, a shuttle may comprise a barcode reader, an RFID reader, or another way of identifying the storage unit that the automated shuttle is carrying. The automated shuttle may use the identified storage unit to establish the goods that are in the respective storage unit, for example, by querying a corresponding database. Each good may be associated with a specific admissible acceleration and/or an admissible deceleration and the automated shuttle may then apply the respective admissible acceleration and/or deceleration for as long as it carries the respective storage unit.

In another example, the automated shuttle may after loading a storage unit query a central control unit or a database for an admissible acceleration and/or an admissible deceleration associated with the respective storage unit and apply that admissible acceleration and/or that admissible deceleration for as long as the specific transport unit is carried by the automated shuttle.

In another exemplary embodiment, each automated shuttle of the one or more automated shuttles may be configured to apply a different admissible acceleration when carrying a storage unit as compared to when the automated shuttle does not carry a storage unit. Likewise, each automated shuttle of the one or more automated shuttles may be configured to apply a different admissible deceleration when carrying a storage unit as compared to when the automated shuttle does not carry a storage unit. For example, the automated shuttles may accelerate faster and brake harder when not carrying a storage unit as there is no risk of damaging any goods and the shuttle may travel faster to the next pickup location.

In a preferred embodiment, each automated shuttle of the one or more automated shuttles is configured so that when the automated shuttle moves on a section of the shuttle tracks for which a section-specific acceleration limit is defined, the acceleration of the automated shuttle does not exceed either of the admissible acceleration and the section-specific acceleration limit. Alternatively, each automated shuttle of the one or more automated shuttles is configured so that when the automated shuttle moves on a section of the shuttle tracks for which a section-specific deceleration limit is defined, the deceleration of the automated shuttle does not exceed either of the admissible deceleration and the section-specific deceleration limit. For example, section-specific acceleration limits and deceleration limits may be defined for the ramps interconnecting the rack levels. The section-specific acceleration and deceleration limits are only applied if they are lower than the admissible acceleration and the admissible deceleration, respectively. In other words, the automated shuttle always applies the lower of the admissible acceleration and the section-specific acceleration to prevent damage of the goods located in the storage unit. Likewise, the automated shuttle always applies the lower of the admissible deceleration and the section-specific deceleration to prevent damage of the goods located in the storage unit.

Preferably, each automated shuttle of the one or more automated shuttles is configured so that in case no admissible acceleration is set for the automated shuttle, the acceleration of the automated shuttle is limited to a default acceleration limit. Likewise, each automated shuttle of the one or more automated shuttles is preferably configured so that in case no admissible deceleration is set for the automated shuttle, the acceleration of the automated shuttle is limited to a default deceleration limit. The default acceleration and deceleration limits provide an advantageous way of preventing damage to goods that are highly susceptible to damage caused by high positive and negative accelerations. For example, in this embodiment an automated shuttle could always fall back to the default acceleration and deceleration limit unless a different admissible acceleration or admissible deceleration limit and, in particular, a greater admissible acceleration or admissible deceleration has been set, respectively. In other embodiments, the default acceleration and deceleration limits could provide a middle ground that provides a tradeoff between securely transporting most goods while keeping the speed of the automated shuttles high.

In a preferred embodiment, each automated shuttle comprises a first set of wheels for driving on shuttle tracks extending parallel to the first axis and a second set of wheels for driving on shuttle tracks extending parallel to the second axis. The shuttle is configured for selectively driving either on the first set of wheels or on the second set of wheels.

In other words, in the preferred embodiment each automated shuttle comprises two sets of wheels. Each set of wheels has, for example, four wheels. A first set of wheels is provided for driving in directions extending parallel to the first axis, whereas the second set of wheels is provided for driving in directions extending parallel to the second axis. For changing the direction in which the shuttle drives, the set of wheels which is in contact with the shuttle tracks is changed. This may, for example, be achieved by moving the wheels of the first set up and down in the vertical direction. When the wheels of the first set of wheels are been moved downwards towards the tracks, the shuttle is being pushed upwards and the wheels of the second set of wheels are brought out of contact with the shuttle tracks. The shuttle is then able to drive in the directions extending parallel to the first axis. When the first set of wheels is moved upwards, the wheels of the first set disengage from the tracks and the wheels of the second set are brought into contact with the tracks. The shuttle can then drive in directions extending parallel to the second axis. It is noted that different admissible accelerations and/or admissible decelerations may be set for the different directions, i.e., the different sets of wheels.

In an alternative exemplary embodiment, the shuttle comprises a single set of wheels. The wheels of this set of wheels may turn for changing directions of the shuttle.

In a second aspect, the invention is directed to a method for operating an automated storage system according to any of the preceding embodiments. During operation of the one or more automated shuttle, the acceleration of the automated shuttle does not exceed the admissible acceleration. The admissible acceleration of each automated shuttle of the one or more automated shuttles is modified. Alternatively or additionally, the deceleration of the automated shuttle does not exceed the admissible deceleration. The admissible deceleration of each automated shuttle of the one or more automated shuttles is modified.

In a preferred embodiment, the control unit remotely modifies the admissible acceleration and/or the admissible deceleration of each automated shuttle of the one or more automated shuttles.

Preferably, the same admissible acceleration is set by the central control unit for all automated shuttles of the one or more automated shuttles and/or the same admissible deceleration is set by the central control unit for all automated shuttles of the one or more automated shuttles. Alternatively or additionally, the central control unit preferably sets an individual admissible acceleration for least one automated shuttle of the one or more automated shuttles and/or an individual admissible deceleration for least one automated shuttle of the one or more automated shuttles.

In a preferred embodiment, at least one automated shuttle of the one or more automated shuttles determines an acceleration limit associated with a storage unit transported by the respective automated shuttle and modifies the admissible acceleration of the automated shuttle based on the determined acceleration limit associated with the storage unit transported by the automated shuttle. Alternatively or additionally, at least one automated shuttle of the one or more automated shuttles determines a deceleration limit associated with a storage unit transported by the respective automated shuttle and modifies the admissible deceleration of the automated shuttle based on the determined deceleration limit associated with the storage unit transported by the automated shuttle.

If is further preferred that the acceleration of the automated shuttle does not exceed either of the admissible acceleration and a section-specific acceleration limit when the automated shuttle moves on a section of the shuttle tracks for which a section-specific acceleration limit is defined. Alternatively or additionally, the deceleration of the automated shuttle does not exceed either of the admissible deceleration and a section-specific deceleration limit when the automated shuttle moves on a section of the shuttle tracks for which a section-specific deceleration limit is defined.

Further preferably, in case no admissible acceleration is set for an automated shuttle of the one or more automated shuttles, the acceleration of the automated shuttle is limited to a default acceleration limit and/or the deceleration of the automated shuttle is limited to a default deceleration limit.

In a preferred embodiment, each automated shuttle comprises a first set of wheels for driving on shuttle tracks extending parallel to the first axis and a second set of wheels for driving on shuttle tracks extending parallel to the second axis. The shuttle selectively drives either on the first set of wheels or on the second set of wheels.

With regard to the details and advantages of the particular embodiments of a method for operating an automated storage system, reference is made to the preceding description of the embodiments of an automated storage system and, in particular, to those embodiments that have structural features corresponding to the method features.

In the following, the present invention will be described in more detail with regard to the drawings showing an exemplary embodiment of an automated storage system, wherein
- Figure 1: shows a schematic front view of a part of an exemplary embodiment of an automated storage system,
- Figure 2: shows a schematic top view of a part of a rack level of the exemplary embodiment of Figure 1, and
- Figure 3: shows a schematic side view of an exemplary embodiment of an automated shuttle.

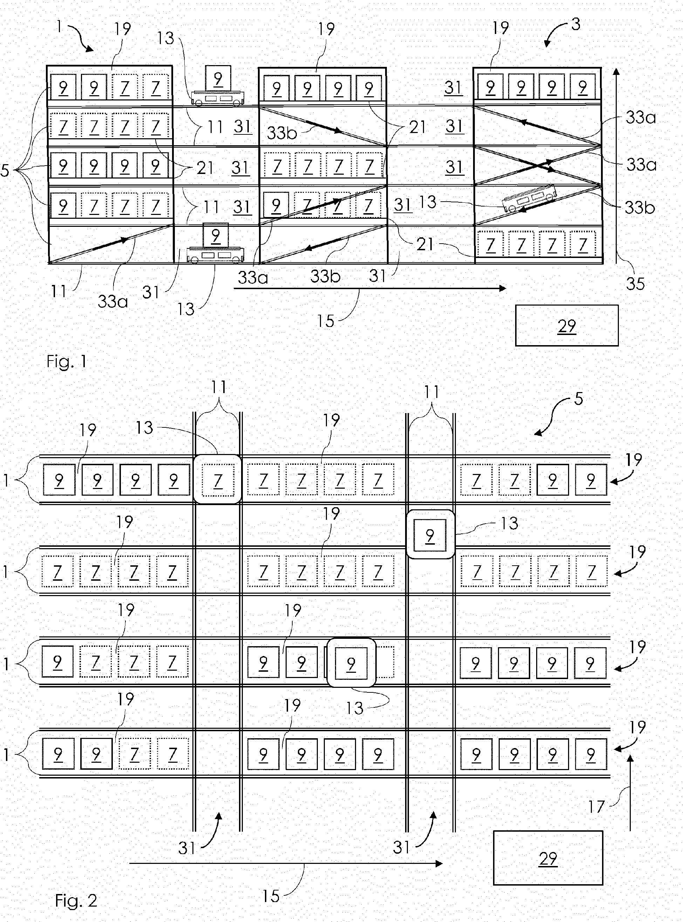

Figure 1 shows an exemplary embodiment of an automated storage system 1 comprising a storage rack 3 with five storage levels 5. In the following, details of the embodiment of the automated storage system 1 will be described in parallel with an embodiment of a method for operating an automated storage system 1.

On each of the storage levels 5, a plurality of storage positions 7 are provided. Empty storage positions 7 are indicated in Figure 1 as boxes drawn in dashed lines, whereas storage positions 7 that are occupied with storage units 9 are indicated as boxes in solid lines. In every rack level 5 there are 12 storage positions 7 that are visible in Figure 7. However, not all storage positions 7 and storage units 9 are shown as boxes in Figure 1 to keep the drawing intelligible. Also, storage positions 7 that are occupied with a storage unit 9 are only designated with the reference numeral 9.

The storage units 9 may also be referred to as storage bins, totes, or other kinds of containers in which goods, items, or products to be stored are located. In the exemplary embodiment shown in the Figures, all storage units have an identical footprint. The storage units 9 may be individual units but could also represent stacks of multiple containers.

The storage positions 7 of a single rack level 5 are shown in Figure 2. The storage positions 7 are interconnected by shuttle tracks 11 for automated shuttles 13. The shuttle tracks 11 are depicted as double lines in Figures 1 and 2 which extend either parallel to a first axis 15 or a second axis 17. The first axis 15 is perpendicular to the second axis 17 and both axes 15, 17 extend parallel to a horizontal plane. The shuttle tracks 11 form storage channels 19 extending parallel to the first axis 15 along which the storage position 7 are arranged. In Figure 1 only selected storage channels have been designated with a reference numeral to keep the Figure intelligible.

It is noted that the spacing between adjacent storage channels 19 in Figure 2 is solely shown for illustrational purposes. The storage channels 19 may also be placed directly adjacent to each other. The storage units 9 are placed on storage rails 21 extending above the shuttle tracks 11. The storage rails 21 are only shown in Figure 1 and only for those storage channels 19 in which storage position 7 or storage units 9 are depicted. Again, only selected storage rails 21 have been designated with reference numerals. Since the storage rails 21 are mounted at a position above the shuttle tracks 11 allowing empty shuttles 13 to drive below the storage rails 21 through the storage channels 19.

For lifting a storage unit 9 from a storage rail 21, a shuttle 13 drives below the storage unit 9 and lifts or raises the storage unit 9 up. Likewise, for placing a storage unit 9 at a storage position 7, the shuttle 13 carrying the storage unit 9 drives to the storage position 7, lowers the storage unit 9 onto the storage rail 21 and can then drive off without the storage unit 9.

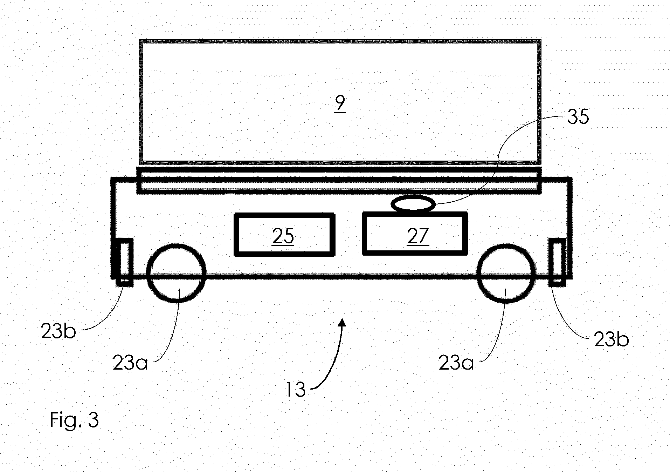

A more detailed view of an automated shuttle 13 carrying a storage unit 9 is shown in Figure 3. The shuttle 13 comprises two sets of wheels 23a, 23b. The wheels 23a of the first set are provided for driving parallel to the first axis 15, whereas the second set of wheels 23b is provided for driving parallel to the second axis 17. For switching directions, a shuttle 13 moving parallel to the first axis 15 lifts the wheels 23a upwards until only the wheels 23b of the second set are in contact with the shuttle tracks 11. For changing directions in the opposite way, the wheels 23a of the first set are moved downwards until they are in contact with the shuttle tracks 11 and the wheels 23b of the second set have disengaged from the shuttle tracks 11.

The shuttle 13 further comprises a drive unit 25 and a shuttle control module 27. The drive unit 25 is an electric motor driving the wheels 23a, 23b of the shuttle 13. The control module 27 may be a general-purpose computing unit which is configured for various task. Amongst others, the shuttle control module 27 can instruct the drive unit 25 to drive at a certain speed, change directions, drive to a specific storage position 7, and control acceleration and deceleration of the shuttle 13. The control unit is further adapted to communicate with a central control unit 29 of the automated storage assembly 1.

The shuttle tracks 11 forming the storage channels 19 are interconnected by shuttle tracks 11 extending parallel to the second axis 17. These shuttle tracks 11 are also referred to as main aisles 31. For moving storage units 5 between rack levels 5, the shuttle tracks 11 of adjacent rack levels 5 are connected by inclined ramps 33a, 33b. The ramps 33a, 33b are only shown in Figure 1 and are considered to generally extend in a direction extending parallel to the first axis 15. However, the ramps 33a, 33b also have a component extending vertically, i.e., they also extend partially in direction extending parallel to a vertical axis 35. The inclined ramps 33a, 33b are one-way ramps in the sense that the ramps 33a are only for shuttles 13 driving upwards whereas the ramps 33b are only for shuttles 13 driving downwards.

The automated shuttles 13 are configured so that while driving on the shuttle tracks 11, the shuttles 13 do not exceed an admissible acceleration and an admissible deceleration which are less than a maximum acceleration and a maximum deceleration of the shuttle 13, respectively. The maximum acceleration and the maximum deceleration are not necessarily the technically feasible maximum acceleration and deceleration but rather the acceleration and the deceleration that are the uppermost speed changes that are considered safe when driving through the automated storage system 1. The admissible acceleration and the admissible deceleration are not fixed values but can be modified, for example, by the shuttle control module 27 or by the central control unit 29.

In the embodiment shown in the Figures, the central control unit 29 may remotely change the admissible acceleration and the admissible deceleration of the shuttles 13 to protect goods or products transported by the shuttles 13 from acceleration-induced damage while maintaining a fast-operating speed of the shuttles 13. The admissible acceleration and the admissible deceleration of the shuttles can be controlled in different ways.

For example, the central control unit 29 may remotely set the admissible acceleration and the admissible deceleration for the shuttles 13 using one or more wireless transmissions. The admissible acceleration and the admissible deceleration can in this way be set for all shuttles 13 to the same value. This may be particularly useful in case all goods stored in the automated storage assembly 1 are susceptible to damage caused by faster accelerations and decelerations or in case certain goods need particular protection and it needs to be ensured that no automated shuttle 13 accelerates and brakes too fast. The central control 29 can also set only one of the admissible acceleration and the admissible deceleration for all shuttles 13 if only one of the values needs to be limited to avoid damages.

Alternatively, the central control unit 29 sets the admissible acceleration and the admissible deceleration for some or all of the shuttles 13 individually. For example, when a shuttle 13 is instructed to collect a particular storage unit 9, the central control unit 29 informs the shuttle control module 27 that while transporting the particular storage unit 29, the acceleration of the shuttle 13 is to be set to a specific admissible acceleration and the deceleration of the shuttle 13 is limited to a specific admissible deceleration. Once the shuttle 13 unloads the respective storage unit 9, it may return, for example, to a default admissible acceleration and a default admissible deceleration or an admissible acceleration and an admissible deceleration that was previously set for all shuttles 13.

Individual admissible accelerations and decelerations can advantageously be used in different ways. For example, a shuttle 13 transporting a storage unit 9 with particularly delicate goods may be instructed to accelerate and brake very carefully. For another shuttle 13 which carries a storage unit 9 with comparatively robust goods, the central control unit 29 may set a higher admissible acceleration and higher admissible deceleration to reduce the travel time of the shuttle 13.

Furthermore, the shuttle control module 27 comprises an RFID reader 35 forming a means for determining an acceleration limit and a deceleration limit associated with a storage unit 9. The RFID reader reads an identifier of the storage unit 9 which the shuttle 13 carries. The shuttle control module 27 may then query a database that is part of the central control unit 29 for information regarding the identified storage unit 9. The information returned from the database may either be an admissible acceleration and an admissible deceleration for the identified storage unit 9 or an information regarding the articles included in the storage unit 9 which the shuttle control module 27 may use to determine an admissible acceleration and an admissible deceleration for the respective articles. The shuttle control module 27 will then set the admissible acceleration and the admissible deceleration obtained for the identified storage unit 9 for as long as the storage unit 9 is carried by the shuttle 13.

The automated shuttles 13 also observe acceleration and deceleration limits that are specific to parts of the shuttle tracks 11. For example, when going down one of the ramps 33b, the deceleration may be limited to a deceleration limit that is less than a deceleration limit that is applied when the shuttles 13 drive upwards on of the ramps 33a. When going up one of the ramps 33b, the acceleration may be limited to an acceleration limit that is less than an acceleration limit that is applied when the shuttles 13 drive downwards on of the ramps 33a. Furthermore, different acceleration and deceleration limits may be applied by the shuttles 13 when driving through a storage channel 10 as compared to driving along one of main aisles 31. In another embodiment, a shuttle 13 may be allowed to accelerate faster when driving on a shuttle track 11 that is used for driving in one direction only as compared to a shuttle track 11 which is used for driving in opposite directions. Also, shuttles 13 may generally allowed to accelerate and decelerate faster when not carrying a cargo unit 9 as compared to when carrying a cargo unit 9.

In case an acceleration limit or a deceleration limit has been set for a shuttle track 11, the acceleration limit and the deceleration limit only supersede an admissible acceleration and an admissible deceleration, if the acceleration limit is lower than the admissible acceleration or the deceleration limit is lower than the admissible deceleration, respectively. In other words, the shuttle 13 observes the lower value of an acceleration limit and an admissible acceleration as well as the lower value of a deceleration limit and an admissible deceleration. This way it can be ensured that the shuttle 13 does not accelerate too fast or brake too hard in case the storage unit 9 loaded onto the shuttle 13 includes delicate goods.

Whenever no admissible acceleration or admissible deceleration has been set by the central control unit 29 or determined by a shuttle 13 for a transported storage unit 9 and when no acceleration limit or no deceleration limit have been specified for the shuttle tracks 13 on which the shuttle 13 is currently driving, the shuttle 13 falls back to a default admissible acceleration and default admissible acceleration. The default admissible acceleration and the default admissible deceleration are preferably also set at the central control unit 29. Generally, the default admissible acceleration and the default admissible deceleration is set to allow safe travel of all shuttles 13 through the automated storage system 1 without damaging most goods. As such, the default acceleration may be lower than acceleration limits that are defined for certain high-speed track sections but may be higher than admissible accelerations set for particularly valuable or easily damaged goods. Likewise, the default deceleration may be lower than deceleration limits that are defined for certain high-speed track sections but may be higher than admissible decelerations set for particularly valuable or easily damaged goods.

### Reference numerals

- 1: automated storage system
- 3: storage rack
- 5: storage level
- 7: storage position
- 9: storage unit
- 11: shuttle track
- 13: automated shuttle
- 15: first axis
- 17: second axis
- 19: storage channels
- 21: storage rail
- 23a, 23b: wheels
- 25: drive unit
- 27: shuttle control module
- 29: central control unit
- 31: main aisle
- 33a, 33b: ramp
- 35: RFID reader

## Claims

1. An automated storage system (1) comprising a storage rack (3) with a plurality of storage positions (7) for storage units (9) on multiple rack levels (5) and one or more automated shuttles (13) for transporting storage units (9) to and from each of the plurality of storage positions on shuttle tracks (11), wherein the shuttle tracks (11) extend parallel to a first axis (15) and parallel to a second axis (17), wherein the first axis (15) is perpendicular to the second axis (17),
wherein each automated shuttle (13) of the one or more automated shuttles (13) comprises at least one drive unit (25), wherein the at least one drive unit (25) drives one or more sets of wheels (23a, 23b) for moving on the shuttle tracks (11),
wherein each automated shuttle (13) of the one or more automated shuttles (13) is configured so that during operation of the shuttle (13) an acceleration of the automated shuttle (13) does not exceed an admissible acceleration, wherein the admissible acceleration is less than a maximum possible acceleration of the shuttle, and/or a deceleration of the automated shuttle (13) does not exceed an admissible deceleration, wherein the admissible deceleration is less than a maximum possible deceleration of the shuttle (13), and
wherein the automated storage system (1) is configured so that the admissible acceleration and/or the admissible deceleration of each automated shuttle (13) of the one or more automated shuttles (13) can be modified.

2. Automated storage system (1) according to claim 1, wherein the automated storage system (1) comprises a central control unit (29) configured for communicating with each of the automated shuttles, and wherein the control unit (29) is further configured for remotely modifying the admissible acceleration and/or the admissible deceleration of each automated shuttle (13) of the one or more automated shuttles (13).

3. Automated storage system (1) according to claim 2, wherein the central control unit (29) is configured for setting the same admissible acceleration and/or the same admissible deceleration for all automated shuttles (13) of the one or more automated shuttles (13) and/or
wherein the central control unit (29) is configured for setting an individual admissible acceleration and/or an individual admissible deceleration for least one automated shuttle (13) of the one or more automated shuttles (13).

4. Automated storage system (1) according to any of the preceding claims, wherein at least one automated shuttle (13) of the one or more automated shuttles (13) comprises a means (35) for determining an acceleration limit and/or deceleration limited associated with a storage unit (9) transported by the respective automated shuttle (13),
wherein the at least one automated shuttle (13) is further configured for modifying the admissible acceleration of the automated shuttle (13) based on the determined acceleration limit associated with the storage unit (9) transported by the automated shuttle (13), and/or for modifying the admissible deceleration of the automated shuttle (13) based on the determined deceleration limit associated with the storage unit (9) transported by the automated shuttle (13).

5. Automated storage system (1) according to any of the preceding claims, wherein each automated shuttle (13) of the one or more automated shuttles (13) is configured so that when the automated shuttle (13) moves on a section of the shuttle tracks (11) for which a section-specific acceleration limit and/or deceleration limit is defined, the acceleration of the automated shuttle (13) does not exceed either of the admissible acceleration and the section-specific acceleration limit and/or the deceleration of the automated shuttle (13) does not exceed either of the admissible deceleration and the section-specific deceleration limit.

6. Automated storage system (1) according to any of the preceding claims, wherein each automated shuttle (13) of the one or more automated shuttles (13) is configured so that in case no admissible acceleration is set for the automated shuttle (13), the acceleration of the automated shuttle (13) is limited to a default acceleration limit, and/or
wherein each automated shuttle (13) of the one or more automated shuttles (13) is configured so that in case no admissible deceleration is set for the automated shuttle (13), the deceleration of the automated shuttle (13) is limited to a default deceleration limit.

7. Automated storage system (1) according to any of the preceding claims, wherein each automated shuttle (13) comprises a first set of wheels (23a, 23b) for driving on shuttle tracks (11) extending parallel to the first axis (15) and a second set of wheels (23a, 23b) for driving on shuttle tracks (11) extending parallel to the second axis (17), wherein the shuttle (13) is configured for selectively driving either on the first set of wheels (23a, 23b) or on the second set of wheels (23a, 23b).

8. A method for operating an automated storage system (1) according to any of the preceding claims,
wherein during operation of the one or more automated shuttles (13), the acceleration of the automated shuttle (13) does not exceed the admissible acceleration, wherein the admissible acceleration of each automated shuttle (13) of the one or more automated shuttles (13) is modified, and/or
wherein during operation of the one or more automated shuttles (13), the deceleration of the automated shuttle (13) does not exceed the admissible deceleration, wherein the admissible deceleration of each automated shuttle (13) of the one or more automated shuttles (13) is modified.

9. Method according to claim 8, wherein the control unit (29) remotely modifies the admissible acceleration of each automated shuttle (13) of the one or more automated shuttles (13) and/or the control unit (29) remotely modifies the admissible deceleration of each automated shuttle (13) of the one or more automated shuttles (13).

10. Method according to claim 9, wherein the same admissible acceleration is set by the central control unit (29) for all automated shuttles (13) of the one or more automated shuttles (13) and/or wherein the central control unit (29) sets an individual admissible acceleration for least one automated shuttle (13) of the one or more automated shuttles (13) and/or
wherein the same admissible deceleration is set by the central control unit (29) for all automated shuttles (13) of the one or more automated shuttles (13) and/or wherein the central control unit (29) sets an individual admissible acceleration for least one automated shuttle (13) of the one or more automated shuttles (13).

11. Method according to claim 8, 9 or 10, wherein at least one automated shuttle (13) of the one or more automated shuttles (13) determines an acceleration limit associated with a storage unit (9) transported by the respective automated shuttle (13) and modifies the admissible acceleration of the automated shuttle (13) based on the determined acceleration limit associated with the storage unit (9) transported by the automated shuttle (13), and/ or
wherein at least one automated shuttle (13) of the one or more automated shuttles (13) determines a deceleration limit associated with a storage unit (9) transported by the respective automated shuttle (13) and modifies the admissible deceleration of the automated shuttle (13) based on the determined deceleration limit associated with the storage unit (9) transported by the automated shuttle (13).

12. Method according to any of claims 8 to 11, wherein when the automated shuttle (13) moves on a section of the shuttle tracks (11) for which a section-specific acceleration limit is defined, the acceleration of the automated shuttle (13) does not exceed either of the admissible acceleration and the section-specific acceleration limit, and/or
wherein when the automated shuttle (13) moves on a section of the shuttle tracks (11) for which a section-specific deceleration limit is defined, the deceleration of the automated shuttle (13) does not exceed either of the admissible deceleration and the section-specific deceleration limit.

13. Method according to any of claims 8 to 12, wherein in case no admissible acceleration is set for an automated shuttle (13) of the one or more automated shuttles (13), the acceleration of the automated shuttle (13) is limited to a default acceleration limit and/or wherein in case no admissible deceleration is set for an automated shuttle (13) of the one or more automated shuttles (13), the deceleration of the automated shuttle (13) is limited to a default deceleration limit..

14. Method according to any of claims 8 to 13, wherein each automated shuttle (13) comprises a first set of wheels (23a, 23b) for driving on shuttle tracks (11) extending parallel to the first axis (15) and a second set of wheels (23a, 23b) for driving on shuttle tracks (11) extending parallel to the second axis (17), wherein the shuttle (13) selectively drives either on the first set of wheels (23a, 23b) or on the second set of wheels (23a, 23b).
